# EUROPÄISCHE PATENTSCHRIFT

(11) **EP 1 016 562 B1**
(45) Veröffentlichungstag und Bekanntmachung des Hinweises auf die Patenterteilung: **23.04.2008**
(21) Anmeldenummer: 99126054.8
(22) Anmeldetag: 28.12.1999
(51) Int. Cl.: B60L 7/02

(54) **Elektrische Bremswiderstandsbaueinheit für elektrische Antriebssysteme**
Electrical brake resistor for electric drive systems
Résistance électrique de freinage pour des systèmes d'entraînement électriques

(30) Priorität: 29.12.1998 DE 19860616
(43) Veröffentlichungstag der Anmeldung: 05.07.2000
(73) Patentinhaber: Voith Turbo GmbH & Co. KG, 89522 Heidenheim (DE)
(72) Erfinder: Mühlberger, Uwe, 89522 Heidenheim (DE); Angerer, Wolfram, 89518 Heidenheim (DE)
(74) Vertreter: Dr. Weitzel & Partner

(56) Entgegenhaltungen:
- EP-A- 0 603 907
- DE-A- 3 727 436
- DE-A- 4 446 219
- DE-C- 19 639 713

## Beschreibung

Die Erfindung betrifft ein Antriebssystem für den Einsatz in Fahrzeugen, insbesondere für den Einsatz in Bussen, im einzelnen mit den Merkmalen aus dem Oberbegriff des Anspruches 1.

Antriebssysteme für den Einsatz in Fahrzeugen, umfassend wenigstens eine im Traktionsbetrieb als Motor betreibbare elektrische Maschine, welche wenigstens mittelbar den anzutreibenden Rädern koppelbar ist, sind in einer Vielzahl von Ausführungen bekannt. Bei Anordnung der elektrischen Maschine an beliebiger Stelle im Fahrzeug ist diese in der Regel über einen Wellenstrang mit dem Achsantrieb der Fahrzeugachse gekoppelt. Der Wellenstrang ist dabei vorzugsweise in Form einer Gelenkwelle ausgeführt. Zusätzlich ist es denkbar, daß zwischen der elektrischen Antriebsmaschine und dem Wellenstrang eine Getriebebaueinheit zum Zweck der Drehzahl-/Drehmomentenwandlung zwischengeschaltet ist. Die Leistungsübertragung erfolgt dann in der Regel über ein sogenanntes Ausgleichsgetriebe in Form eines Achsdifferentiales, welches die Leistung auf die beiden anzutreibenden Räder aufteilt. Die im Traktionsbetrieb als Elektromotor arbeitende elektrische Maschine wird von wenigstens einer Energiequelle gespeist. Als Energiequellen stehen dabei eine Verbrennungskraftmaschine, Brennstoffzellen oder eine externe Energiequelle in Form einer elektrischen Oberleitung zur Verfügung. Im erstgenannten Fall handelt es sich um ein dieselelektrisches Antriebssystem, bei welchem in Kraftflußrichtung von der Verbrennungskraftmaschine zu dem das Antriebsrad antreibende Elektromotor hinter der Verbrennungskraftmaschine eine als Generator betreibbare elektrische Maschine vorgesehen wird. Die im Traktionsbetrieb als Generator betreibbare elektrische Maschine ist dabei mechanisch mit der Verbrennungskraftmaschine, welche insbesondere als Dieselmotor ausgeführt ist, koppelbar. Mit der als Antriebsmotor fungierenden elektrischen Maschine ist der Generator elektrisch gekoppelt. Zur Erzeugung der elektrischen Leistung wird die im Traktionsbetrieb als Generator betreibbare elektrische Maschine durch eine Wechselrichtereinheit, vorzugsweise einen 4-Quadranten-Wechselrichter, angesteuert. Die als Radantriebsmotor fungierende elektrische Maschine wird ebenfalls von wenigstens einer Wechselrichtereinheit mit elektrischer Leistung versorgt. Die elektrische Kopplung zwischen der als Generator betreibbaren elektrischen Maschine und der als Radantriebsmotor fungierenden elektrischen Maschine erfolgt in der Regel über einen sogenannten Gleichspannungszwischenkreis. Im Bremsbetrieb, d.h. bei Kraftflußrichtung von den Rädern in Richtung zur Verbrennungskraftmaschine arbeitet die im Traktionsbetrieb motorisch betreibbare elektrische Maschine generatorisch. Die an den Rädern abnehmbare mechanische Leistung wird dann über das Achsdifferential und den Wellenstrang der An- bzw. Abtriebswelle der elektrische Maschine zugeführt und in elektrische Energie umgewandelt. Für die weitere Nutzung der dadurch zur Verfügung stehenden elektrischen Leistung bestehen dann eine Vielzahl von Möglichkeiten, denkbar ist unter anderem die Einspeisung in eine Energiespeichereinrichtung. In der Regel wird jedoch auch ein erheblicher Teil der von der im generatorischen Betrieb der im Traktionsbetrieb als Radantriebsmotor fungierenden elektrischen Maschine erzeugten elektrischen Energie für unterschiedliche Anwendungszwecke in wenigstens einem Widerstand in Wärmeenergie umgewandelt. Diese Widerstände werden auch als Bremswiderstandsbaueinheiten bezeichnet. Diese sind der im Traktionsbetrieb als Antriebsmotor fungierenden elektrischen Maschine zugeordnet

Derartige Antriebssysteme sind beispielsweise aus der DE 196 39 713 C1 und aus der EP 0 603 907 A2 bekannt.

Dabei besteht häufig das Problem, insbesondere bei Ausführungen der Antriebssysteme mit sogenanntem Zentralmotor, d.h. beliebiger Anordnung der als Antriebsmotor fungierenden elektrischen Maschine im Fahrzeug (vorzugweise Anordnung in räumlicher Nähe zu der als Generator betreibbaren elektrischen Maschine bei dieselelektrischen Antriebssystemen) die Bremswiderstandsbaueinheit in optimaler Weise im Antriebssystem zu integrieren. Die Bremswiderstandsbaueinheit wird dabei in der Regel an einer beliebigen Stelle am Fahrzeugrahmen befestigt. Die elektrische Kopplung zwischen der im Traktionsbetrieb als Antriebsmotor fungierenden elektrischen Maschine und der elektrischen Bremswiderstandsbaueinheit bedingt dann jedoch neben längeren Leitungsverbindungen und einer komplizierteren Kabelführung extra vorzusehende Aufhängungsmöglichkeiten für die Bremswiderstandsbaueinheiten am Fahrzeugrahmen. Die Anforderungen an die EMV-Schirmung sind ebenfalls höher.

Der Erfindung liegt daher die Aufgabe zugrunde, ein Antriebssystem der eingangs genannten Art derart weiterzuentwickeln, daß die genannten Nachteile vermieden werden. Im einzelnen ist auf eine Integration einer Bremswiderstandsbaueinheit im Antriebssystem abzustellen, welche hinsichtlich der Anbindung am Fahrzeug möglichst unabhängig auf einfache Art und Weise sowie wenig störend für andere Komponenten erfolgt. Dabei sollte es unerheblich sein, ob es sich um lediglich eine der als Antriebsmotor im Traktionsbetrieb fungierenden elektrischen Maschine zugeordneten Bremswiderstandsbaueinheit handelt oder aber um eine Vielzahl von diesen.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß wird in einem Antriebssystem für den Einsatz in Fahrzeugen mit wenigstens einer motorisch und generatorisch betreibbaren elektrischen Maschine, welche über wenigstens einen Wellenstrang wenigstens mittelbar mit wenigstens einem anzutreibenden Rad koppelbar ist und der wenigstens eine Bremswiderstandsbaueinheit zugeordnet ist, die Bremswiderstandsbaueinheit an der elektrische Maschine angeordnet, vorzugsweise an diese anflanschbar ausgeführt, wobei die Bremswiderstandsbaueinheit in Umfangsrichtung der An- bzw. Abtriebswelle der elektrischen Maschine angeordnet ist. Die Bremswiderstandsbaueinheit ist elektrisch mit der elektrischen Maschine koppelbar. Die Definition An- bzw. Abtriebswelle bezieht sich dabei immer auf die Richtung des Leistungsflusses im motorischen und generatorischen Betrieb der elektrischen Maschine. Unter dem Begriff An- bzw. Abtriebswelle soll dabei auch nicht zwangsläufig nur ein Element in Form eines Wellenendes verstanden werden, sondern auch die rotierenden Elemente, welche die Funktion der An- bzw. Abtriebswelle übernehmen können, mit einschließen. So ist es beispielsweise denkbar, die Funktion der An- bzw. Abtriebswelle der elektrischen Maschine einem flanschartig gestalteten Bereich zuzuordnen.

Die erfindungsgemäße Lösung ermöglicht es, eine Bremswiderstandsbaueinheit mit möglichst geringem Aufwand unabhängig von den gegebenen Einbaubedingungen im Fahrzeug im Antriebsstrang in einem Bereich zu integrieren, welcher bisher in keiner Weise eine Nutzung erfahren hat. In diesem Bereich zwischen Antriebsachse und der im Traktionsbetrieb als Antriebsmotor fungierenden elektrischen Maschine sind auch keine Behinderungen bei der Betätigung anderer Elemente zur Realisierung der Funktionstüchtigkeit des Fahrzeuges zu erwarten. Die zur elektrischen Kopplung erforderlichen Verbindungsleitungen können sehr kurz gehalten werden. Die EMV-Schirmung kann für die gesamte Baueinheit aus als Antriebsmotor im Traktionsbetrieb fungierender elektrischer Maschine und Bremswiderstandsbaueinheit durchgeführt werden. Des weiteren besteht die Möglichkeit, die Gesamtheit der im Traktionsbetrieb als Antriebsmotor fungierenden elektrischen Maschine mit der Bremswiderstandsbaueinheit als vorgefertigte Baueinheit herzustellen und anzubieten. Die Integration im Antriebssystem ist somit unabhängig von den Möglichkeiten der Befestigung am Fahrzeugrahmen oder anderen Elementen auf sehr einfache Art und Weise kostengünstig möglich.

Die Anordnung der Bremswiderstandsbaueinheit erfolgt am Gehäuse der als Antriebsmotor fungierenden elektrischen Maschine. Bezüglich der Kopplung mit dem Gehäuse bestehen eine Vielzahl von Möglichkeiten. Vorzugsweise erfolgt die Kopplung mechanisch durch Anflanschen der Bremswiderstandsbaueinheit am Gehäuse. Denkbar ist jedoch auch, bei entsprechender Ausgestaltung der elektrischen Kopplungsmöglichkeit zwischen der Bremswiderstandsbaueinheit und dem Elektromotor, beispielsweise in Form einer elektrischen Steckverbindung, diese Mittel mit zur Befestigung zu benutzen. Dies setzt jedoch voraus, daß die als Antriebsmotor fungierende elektrische Maschine hinsichtlich der Mittel zur elektrischen Kopplung in entsprechender Weise ausgestaltet sein muß.

Jeder als Antriebsmotor fungierenden elektrischen Maschine sind entweder ein oder mehrere Bremswiderstandsbaueinheiten zugeordnet. Entsprechend der konstruktiven Gestaltung der Bremswiderstandsbaueinheit sind diese bei einer Ausführung mit mehreren Bremswiderstandsbaueinheiten ringförmig um die An- bzw. Abtriebswelle der als Antriebsmotor fungierenden elektrischen Maschine gruppiert angeordnet oder aber in axialer Richtung in Einbaulage im Antriebssystem betrachtet nebeneinander angeordnet.

Der erstgenannte Fall bietet den Vorteil, daß hinsichtlich ihrer geometrischen Ausgestaltung konventionell ausgeführte Bremswiderstandsbaueinheiten in erfindungsgemäßer Art und Weise im Antriebsstrang einzeln oder in Mehrzahl integriert werden können. Vorzugsweise wird jedoch eine Ausführung der elektrischen Bremswiderstandsbaueinheit gewählt, welche geeignet ist, die An- bzw. Abtriebswelle wenigstens teilweise zu umschließen, wobei bevorzugt eine ringförmige Ausgestaltung der Bremswiderstandsbaueinheit angestrebt wird. Die Bremswiderstandsbaueinheit kann dann koaxial zur An- bzw. Abtriebswelle der als Antriebsmotor fungierenden elektrischen Maschine angeordnet werden. Diese Möglichkeit der Anordnung stellt die bezüglich der Bereitstellung der Anschlußelemente und des erforderlichen Bauraumes günstigste Variante dar.

Für den Fall, daß eine Mehrzahl von Bremswiderstandsbaueinheiten benötigt wird, sind diese ebenfalls vorzugsweise ringförmig ausgebildet und derart modular aufgebaut, daß diese in axialer Richtung in Einbaulage betrachtet nebeneinander und koaxial zur An- bzw. Abtriebswelle der als Antriebsmotor fungierenden elektrischen Maschine angeordnet sind. Die Kopplung der einzelnen Widerstandsbaueinheiten untereinander erfolgt dabei im einfachsten Fall über form- und kraftschlüssige Verbindungen.

Bei der ringförmigen Ausgestaltung der Bremswiderstandsbaueinheit ist darauf abzustellen, daß der Innendurchmesser der Bremswiderstandsbaueinheit derart bemessen ist, daß ein Umschließen der An- bzw. Abtriebswelle der als Antriebsmotor fungierenden elektrischen Maschine möglich ist. Entsprechend der Abmessungen in axialer Richtung, d.h. der Erstreckung der Bremswiderstandsbaueinheit von der Gehäusewand der elektrischen Maschine weg, besteht die Möglichkeit, daß die Bremswiderstandsbaueinheit nicht nur die An- bzw. Abtriebswelle der als Antriebsmotor fungierenden elektrischen Maschine umschließt, sondern auch die Kopplung mit dem sich möglicherweise daran anschließenden Wellenstrang oder einem anderen Übertragungselement. Die Kopplung zwischen An- bzw. Abtriebswelle der elektrischen Maschine und dem Wellenstrang oder einem anderen Element zur Leistungsübertragung, beispielsweise einer Drehzahl-/Drehmomentenwandlungs- oder übertragungseinrichtung kann vielgestaltig ausgeführt sein. Im einfachsten Fall weisen beide - Wellenstrang oder Drehzahl-/Drehmomentenwandlungs- oder übertragungseinrichtung, insbesondere deren Anschlußwelle, und An- bzw. Abtriebswelle der elektrischen Maschine - jeweils einen flanschartig gestalteten Endbereich auf, wobei die beiden flanschartigen Endbereiche miteinander form- und/oder kraftschlüssig koppelbar sind. Denkbar sind jedoch auch Ausführungen mit Kupplungseinrichtungen.

Die erfindungsgemäße Lösung ist für Antriebssysteme mit wenigstens einer motorisch und generatorisch betreibbaren elektrischen Maschine, welche über einen Wellenstrang wenigstens mittelbar mit wenigstens einem anzutreibenden Rad koppelbar ist, einsetzbar, unabhängig von der Art der im Traktionsbetrieb vorgenommenen Energieversorgung, welche die Art des Antriebssystemes bestimmt. Möglich ist somit die Integration in
a) dieselelektrischen Antriebssystemen
b) Antriebssystemen mit Brennstoffzellenantrieb
c) Antriebssystemen mit externer elektrischer Energieversorgung, beispielsweise aus einer Oberleitung

Im erstgenannten Fall fungiert als Energiequelle eine Verbrennungskraftmaschine, welche mit einer im Traktionsbetrieb als Generator betreibbaren elektrischen Maschine mechanisch koppelbar ist. Die als Generator betreibbare elektrische Maschine ist elektrisch mit der als Antriebsmotor fungierenden elektrischen Maschine koppelbar. Die elektrische Kopplung erfolgt über einen sogenannten Spannungszwischenkreis. Der als Generator betreibbaren elektrische Maschine und der im Traktionsbetrieb als Antriebsmotor fungierenden elektrischen Maschine sind zur Steuerung der erzeugbaren bzw. aufnehmbaren elektrischen Leistung entsprechende Einrichtungen in Form von Umrichtern zugeordnet, welche ansteuerbar sein können.

Bei der zweiten, unter b) genannten Möglichkeit wird über eine Brennstoffzelleneinheit chemische Energie in elektrische Energie umgewandelt, welche zur Speisung der als Antriebsmotor fungierenden elektrischen Maschine genutzt werden kann.

Bei der unter c) aufgeführten Energiequelle wird elektrische Leistung aus einem externen Netz zur Verfügung gestellt, welche zur Speisung der als Antriebsmotor fungierenden elektrischen Maschine genutzt wird.

Für die konkrete konstruktive Ausgestaltung des Gesamtantriebssystems bestehen eine Vielzahl von Möglichkeiten, welche entsprechend den Einsatzerfordernissen im Ermessen des zuständigen Fachmannes liegen.

Die erfindungsgemäße Lösung wird nachfolgend anhand von Figuren erläutert. Darin ist im einzelnen folgendes dargestellt:
- Figur 1: verdeutlicht anhand eines Ausschnittes aus einem Antriebssystem die erfindungsgemäße Anordnung der Bremswiderstandsbaueinheit mit bevorzugter ringförmiger Ausführung der Bremswiderstandsbaueinheit;
- Figur 2: verdeutlicht anhand eines Ausschnittes aus einem Antriebssystem in Analogie zur Figur 1 eine erfindungsgemäße Anordnungsmöglichkeit einer Bremswiderstandsbaueinheit mit einer von der ringförmigen Geometrie abweichenden Ausgestaltung;
- Figur 3: verdeutlicht eine Ausführung entsprechend Figur 1 mit einer Mehrzahl von Bremswiderstandsbaueinheiten.

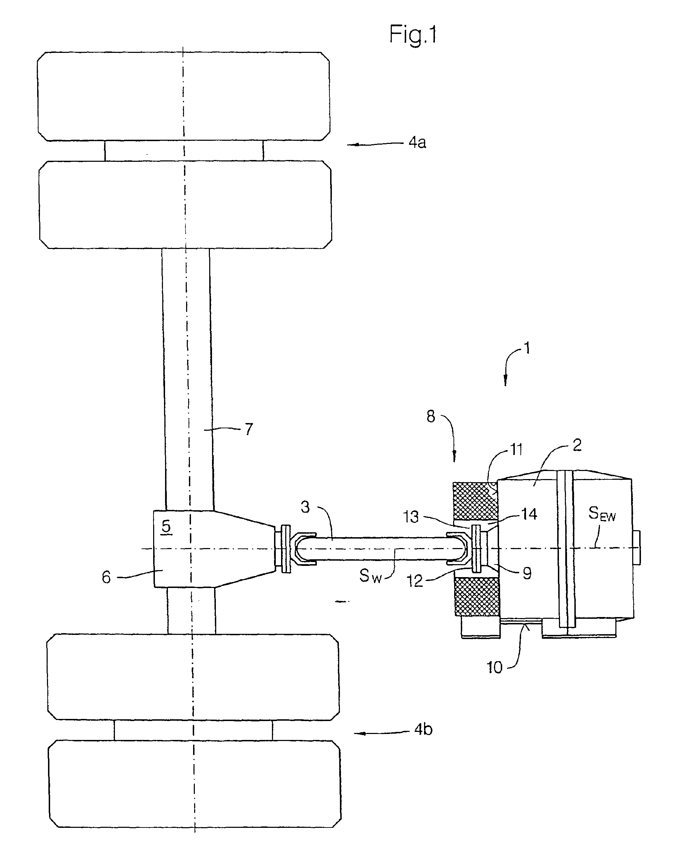

Die Figur 1 verdeutlicht anhand einer schematisch vereinfachten Darstellung einen Ausschnitt aus einem Antriebssystem 1, umfassend wenigstens eine im Traktionsbetrieb als Antriebsmotor fungierende elektrische Maschine 2, welche wenigstens mittelbar über einen Wellenstrang 3 mit einem anzutreibenden Rad, hier den beiden Rädern 4a und 4b, koppelbar ist. Zwischen dem Wellenstrang 3 und den Rädern 4a und 4b ist zu diesem Zweck eine Drehzahl-/Drehmomentenwandlungseinrichtung 5 zwischengeschaltet, welche als Ausgleichsgetriebebaueinheit in Form eines Achsdifferentials 6 ausgeführt ist. Über das Achsdifferential 6 erfolgt eine Leistungsaufteilung auf die beiden anzutreibenden Räder 4a und 4b. Die Anordnung der als Antriebsmotor fungierenden elektrischen Maschine 2 erfolgt hier in räumlicher Entfernung von den anzutreibenden Rädern 4a und 4b und der Achse 7, auf welcher die beiden Räder 4a und 4b angeordnet sind. Zur Umwandlung der im generatorischen Betrieb der elektrischen Maschine 2 bei Einspeisung von Bremsenergie erzeugten elektrischen Leistung in Wärme ist der elektrischen Maschine 2 wenigstens eine Bremswiderstandsbaueinheit 8 zugeordnet. Die Bremswiderstandsbaueinheit 8 ist in Umfangsrichtung der An- bzw. Abtriebswelle 9 der elektrischen Maschine 2 angeordnet und mit der elektrischen Maschine 2 gekoppelt. Vorzugsweise ist die Bremswiderstandsbaueinheit 8 am Gehäuse 10, insbesondere der in Richtung des Wellenstranges weisenden Gehäuseaußenwand 11 angeflanscht. In diesem Fall sind hier im einzelnen nicht dargestellte Mittel zur mechanischen Befestigung der Bremswiderstandsbaueinheit 8 an der Gehäuseaußenwand 11 erforderlich. Diese können beispielsweise Befestigungselemente umfassen.

Die in der Figur 1 im Schnitt dargestellte Bremswiderstandsbaueinheit 8 umschließt ringförmig die An- bzw. Abtriebswelle 9 der elektrischen Maschine 2. Der Begriff An- bzw. Abtriebswelle steht jeweils für die Funktion des mechanischen Elementes Welle im motorischen und generatorischen Betrieb der elektrischen Antriebsmaschine. Im motorischen Betrieb fungiert die Welle 9 als Abtriebswelle bezogen auf die Kraftflußrichtung von der Energiequelle zu den Rädern 4a bzw. 4b. Im generatorischen Betrieb fungiert die Welle 9 als Antriebswelle bezogen auf die Kraftflußrichtung von den Rädern 4a bzw. 4b in Richtung der Energiequelle.

Bei ringförmiger Ausgestaltung der Bremswiderstandsbaueinheit besteht somit die Möglichkeit, diese koaxial zur An- bzw. Abtriebswelle 9 und dem Wellenstrang 3 anzuordnen. Dabei wird in Umfangsrichtung der An- bzw. Abtriebswelle 9 bzw. des Wellenstranges 3 zur Verfügung stehender Bauraum in optimaler Art und Weise ausgenutzt. In der in der Figur 1 dargestellten Ausführung weist die Bremswiderstandsbaueinheit 8 in dieser Ansicht von oben eine axiale Erstreckung in Richtung des Wellenstranges 3 auf, welche zusätzlich dazu führt, daß auch die Kopplung 12 zwischen dem Wellenstrang 3 und der An- bzw. Abtriebswelle 9 der elektrischen Maschine 2 von diesem in Umfangsrichtung umschlossen wird. Die dargestellte Kopplung wird über eine mechanische Verbindung der flanschartig gestalteten Endbereiche 13 des Wellenstranges und 14 der elektrischen Maschine 2 realisiert.

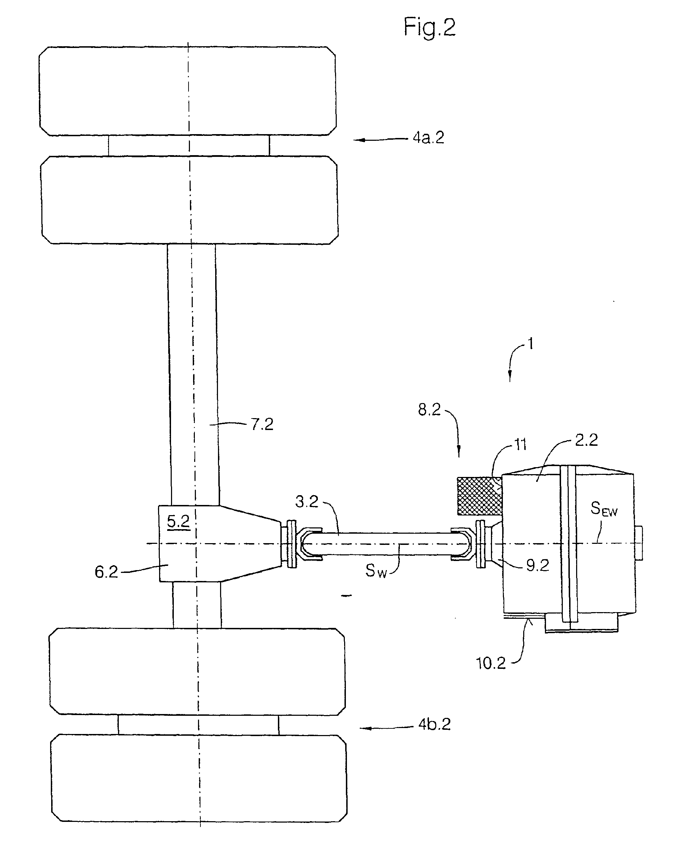

Die Figur 2 verdeutlicht anhand eines Ausschnittes aus einem Antriebssystem in Analogie zur Figur 1 eine Anordnungsmöglichkeit einer Bremswiderstandsbaueinheit 8.2, welche sich hinsichtlich des geometrischen Aufbaus von dem in der Figur 1 dargestellten unterscheidet. Der Grundaufbau des Antriebssystems entspricht dem in der Figur 1 beschriebenen, weshalb für gleiche Elemente die gleichen Bezugszeichen verwendet werden. Der geometrische Aufbau der Bremswiderstandsbaueinheit 8.2 weicht hier von der ringförmigen Ausgestaltung entsprechend Figur 1 ab, so daß zwar erfindungsgemäß eine Anordnung um den Umfang der An- bzw. Abtriebswelle 9.2 der elektrischen Maschine 2.2 erfolgt, diese jedoch nur zu einem sehr geringen Teil von diesem umschlossen werden kann. In dieser Ansicht von oben erfolgt die Anordnung der Bremswiderstandsbaueinheit 8.2 exzentrisch zur Symmetrieachse S_{EM} der An- bzw. Abtriebswelle 9.2 der als Antriebsmotor fungierenden elektrischen Maschine 2.2 bzw. der Symmetrieachse S_{w} des Wellenstranges 3.2. Auch hier wird jedoch durch die Anordnung im Bereich des Umfanges der zur Verfügung stehende Bauraum optimal ausgenutzt.

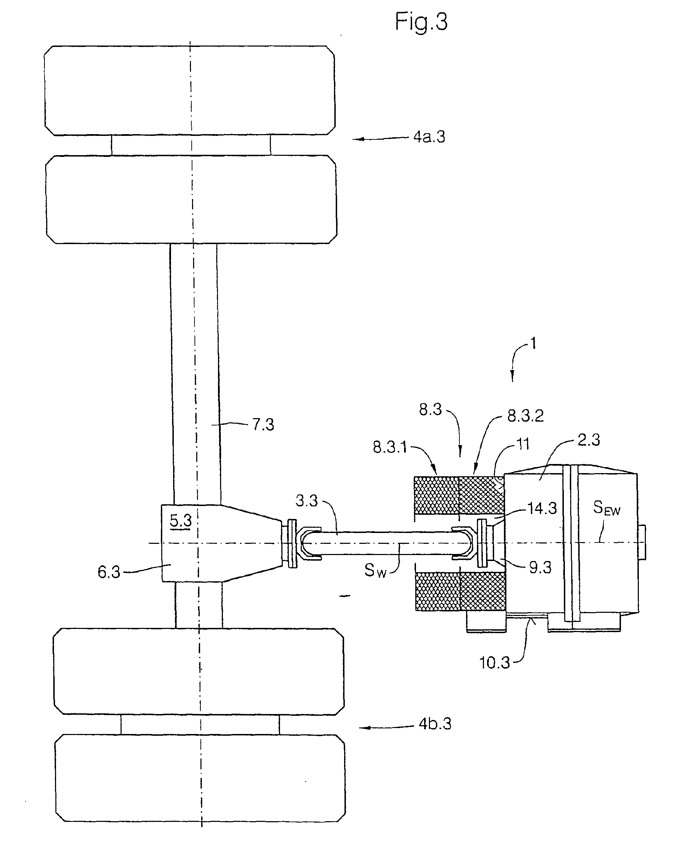

Die Figur 3 verdeutlicht anhand eines Ausschnittes aus einem Antriebssystem entsprechend Figur 1 die erfindungsgemäße Anordnung der Bremswiderstandsbaueinheiten 8.3.1 und 8.3.2 bei Zuordnung einer Mehrzahl von Bremswiderstandsbaueinheiten zur als Antriebsmotor fungierenden elektrischen Maschine 2.3. Der Grundaufbau des Antriebssystems entspricht dem in der Figur 1, daher werden für gleiche Elemente die gleichen Bezugszeichen verwendet. Auch hier sind die Bremswiderstandsbaueinheiten mit dem bevorzugten ringförmigen geometrischen Aufbau ausgeführt. Dabei sind die einzelnen Bremswiderstandsbaueinheiten in modularer Bauweise gestaltet. Diese weisen dazu jeweils wenigstens ein Gehäuse auf, in welchem wenigstens ein elektrischer Widerstand integrierbar ist. Es sind Mittel vorgesehen, welche wahlweise einen Stromkreis über den elektrischen Widerstand oder unter Umgehung dessen realisieren. Der elektrische Widerstand selbst ist vorzugsweise schaltbar. Das heißt, diesem wird ein Stellglied zugeordnet, welches wenigstens die Zuschaltung oder Entkopplung vom Spannungskreis ermöglicht. Dem elektrischen Widerstand ist eine Steuervorrichtung zugeordnet, welche der Ansteuerung der elektrischen Widerstände dient und die vorzugsweise ebenfalls in der Bremswiderstandsbaueinheit integriert ist. Dieser modulare Aufbau ermöglicht den Zusammenbau mehrerer Bremswiderstandsbaueinheiten ohne erforderliche zusätzliche Verkabelung. Ein derartiger Aufbau ist beispielsweise in der Voith-Anmeldung DE 197 54 932 beschrieben.

### Bezugszeichenliste

- 1: Antriebssystem
- 2: im Traktionsbetrieb als Antriebsmotor fungierende elektrische Maschine
- 3: Wellenstrang
- 4a,4b: Räder
- 5: Drehzahl-/Drehmomentenwandlungseinrichtung
- 6: Achsdifferential
- 7: Achse
- 8: Bremswiderstandsbaueinheit
- 9: An- bzw. Abtriebswelle der elektrischen Maschine
- 10: Gehäuse
- 11: Gehäuseaußenwand
- 12: Kopplung
- 13: flanschartiger Endbereich des Wellenstranges
- 14: flanschartiger Endbereich der An- bzw. Abtriebswelle
- S_{w}: Symmetrieachse des Wellenstranges
- S_{EM}: Symmetrieachse der An- bzw. Abtriebswelle der elektrischen Maschine

## Patentansprüche

1. Antriebssystem für den Einsatz in Fahrzeugen mit wenigstens einer motorisch und generatorisch betreibbaren elektrischen Maschine (2, 2.2, 2.3), die über wenigstens einen Wellenstrang (3, 3.2., 3.3) wenigstens mittelbar mit wenigstens einem anzutreibenden Rad (4a, 4b, 4a.2, 4b.2, 4a.3, 4b.3) koppelbar ist; der elektrischen Maschine (2, 2.2, 2.3) ist eine Bremswiderstandsbaueinheit (8, 8.2, 8.3.1, 8.3.2) zugeordnet; **gekennzeichnet durch** die folgenden Merkmale:
die Bremswiderstandsbaueinheit (8, 8.2, 8.3.1, 8.3.2) ist an der elektrischen Maschine (2, 2.2, 2.3) angeordnet;
die Bremswiderstandsbaueinheit (8, 8.2, 8.3.1, 8.3.2) ist in Umfangsrichtung um die An- bzw. Abtriebswelle (9, 9.2., 9.3) der elektrischen Maschine (2, 2.2, 2.3) angeordnet.

2. Antriebssystem nach Anspruch 1, **gekennzeichnet durch** die folgenden Merkmale:
es ist eine Vielzahl von Bremswiderstandsbaueinheiten vorgesehen;
die Bremswiderstandsbaueinheiten sind in axialer Richtung in Einbaulage betrachtet in einer Ebnee ringförmig um den Umfang der An- bzw. Abtriebswelle (9, 9.2, 9.3) der elektrischen Maschine (2, 2.2, 2.3) gruppiert.

3. Antriebssystem nach Anspruch 1 oder Anspruch 2, **dadurch gekennzeichnet, daß** die Bremswiderstandsbaueinheit einen geometrischen Aufbau aufweist, welcher in Umfangsrichtung der An- bzw. Abtriebswelle (9, 9.2, 9.3) der elektrischen Maschine (2, 2.2, 2.3) betrachtet diese wenigstens teilweise umschließt.

4. Antriebssystem nach Anspruch 3, **dadurch gekennzeichnet, daß** die Bremswiderstandsbaueinheit (8, 8.3.1, 8.3.2) derart geometrisch aufgebaut ist, daß diese in Umfangsrichtung der An- bzw. Abtriebswelle (9, 9.2, 9.3) der elektrischen Maschine (2, 2.2, 2.3) diese ringförmig umschließt.

5. Antriebssystem nach Anspruch 4, **gekennzeichnet durch** die folgenden Merkmale:
es sind eine Vielzahl von Bremswiderstandsbaueinheiten (8.3.1, 8.3.2) in axialer Richtung im Antriebssystem bei Kraftflußrichtung vom Wellenstrang (3) zur elektrischen Maschine (2) oder umgekehrt betrachtet nebeneinander angeordnet;
die Bremswiderstandsbaueinheiten (8.3.1, 8.3.2) sind modular aufgebaut und miteinander mechanisch und elektrisch koppelbar.

6. Antriebssystem nach einem der Ansprüche 1 bis 4, **dadurch gekennzeichnet, daß** die einzelne Bremswiderstandsbaueinheit (8, 8.2) oder die Vielzahl der Bremswiderstandsbaueinheiten (8.3.1, 8.3.2) in axialer Richtung bezogen auf die Kraftflußrichtung vom Wellenstrang (3) zur elektrischen Maschine (2) oder umgekehrt betrachtet die Kopplung von Wellenstrang (3, 3.2, 3.3) und elektrischer Maschine (2, 2.2, 2.3) umschließen.

7. Antriebssystem nach Anspruch 6, **dadurch gekennzeichnet, daß** der Wellenstrang (3, 3.2, 3.3) und die An- bzw. Abtriebswelle (9, 9.2, 9.3) der elektrischen Maschine (2, 2.2., 2.3) jeweils einen flanschartig gestalteten Endbereich (13, 13.2, 13.3, 14, 14.2, 14.3) aufweisen und die Kopplung (12) der flanschartigen Endbereiche kraft- und/oder formschlüssig erfolgt.

## Claims

1. A drive system for use in vehicles, comprising at least one electric machine (2, 2.2, 2.3) which can be operated as a motor or generator and which can be coupled via at least one shaft assembly (3, 3.2, 3.3) at least indirectly with at least one wheel (4a, 4b, 4a.2, 4b.2, 4a.3, 4.b3) to be driven;
the electric machine (2, 2.2, 2.3) is associated with a brake resistance module (8, 8.2, 8.3.1, 8.3.2);
**characterized by** the following features:
the brake resistance module (8, 8.2, 8.3.1, 8.3.2) is arranged on the electric machine (2, 2.2, 2.3);
the brake resistance module (8, 8.2, 8.3.1, 8.3.2) is arranged in the circumferential direction about the drive shaft and driven shaft (9, 9.2, 9.3) of the electric machine (2, 2.2, 2.3).

2. A drive system according to claim 1, **characterized by** the following features:
a plurality of brake resistance modules is provided;
the brake resistance modules are grouped in the axial direction when seen in the installed position in one plane in an ring-like manner about the circumference of the drive shaft and driven shaft (9, 9.2, 9.3) of the electric machine (2, 2.2, 2.3).

3. A drive system according to claim 1 or claim 2, **characterized in that** the brake resistance module has a geometric configuration which when seen in the circumferential direction of the drive shaft and driven shaft (9, 9.2, 9.3) of the electric machine (2, 2.2, 2.3) it at least partly encompasses the same.

4. A drive system according to claim 3, **characterized in that** the brake resistance module (8, 8.2, 8.3.1, 8.3.2) is arranged geometrically in such a way that in the circumferential direction of the drive shaft and driven shaft (9, 9.2, 9.3) of the electric machine (2, 2.2, 2.3) it encompasses the same in a ring-like manner.

5. A drive system according to claim 4, **characterized by** the following features:
a plurality of brake resistance modules (8.3.1, 8.3.2) are arranged adjacent to one another when seen in the axial direction in the drive system with direction of power flow from the shaft assembly (3) to the electric machine (2) or vice-versa;
the brake resistance modules (8.3.1, 8.3.2) are arranged modularly and can be coupled with each other mechanically and electrically.

6. A drive system according to one of the claims 1 to 4, **characterized in that** the individual brake resistance module (8, 8.2) or the plurality of brake resistance modules (8.3.1, 8.3.2) encompass the coupling from shaft assembly (3, 3.2, 3.3) and electric machine (2, 2.2, 2.3) when seen in the axial direction relating to the power flow direction from the shaft assembly (3) to the electric machine (2) or vice-versa.

7. A drive system according to claim 6, **characterized in that** the shaft assembly (3, 3.2, 3.3) and the drive shaft and driven shaft (9, 9.2, 9.3) of the electric machine (2, 2.2, 2.3) each have an end region (13, 13.2, 13.3, 14, 14.2, 14.3) which is arranged in a flange-like manner and the coupling (12) of the flange-like end regions occurs in a positive or non-positive way.

## Revendications

1. Système de transmission destiné à être utilisé dans des véhicules avec au moins une machine électrique (2, 2.2, 2.3) pouvant avoir une action motrice et génératrice, qui peut être couplée au moins indirectement par au moins une chaîne d'arbres (3, 3.2., 3.3) à au moins une roue à entraîner (4a, 4b, 4a.2, 4b.2, 4a.3, 4b.3) ;
la machine électrique (2, 2.2, 2.3) est associée à une unité de résistance de freinage (8, 8.2, 8.3.1, 8.3.2) ;
**caractérisé en ce que** :
l'unité de résistance de freinage (8, 8.2, 8.3.1, 8.3.2) est disposée sur la machine électrique (2, 2.2, 2.3) ;
l'unité de résistance de freinage (8, 8.2, 8.3.1, 8.3.2) est disposée dans le sens de la circonférence autour de l'arbre d'entrée et de sortie (9, 9.2., 9.3) de la machine électrique (2, 2.2, 2.3).

2. Système de transmission selon la revendication 1, **caractérisé en ce que** :
il est prévu une pluralité d'unités de résistance de freinage ;
les unités de résistance de freinage sont regroupées en anneau dans la position de montage, vues dans le sens axial, autour de la circonférence de l'arbre d'entrée et de sortie (9, 9.2, 9.3) de la machine électrique (2, 2.2, 2.3).

3. Système de transmission selon la revendication 1 ou la revendication 2, **caractérisé en ce que** l'unité de résistance de freinage présente une construction géométrique qui entoure au moins partiellement l'arbre d'entrée et de sortie (9, 9.2, 9.3) de la machine électrique (2, 2.2, 2.3), vue dans le sens de la circonférence de celui-ci.

4. Système de transmission selon la revendication 3, **caractérisé en ce que** l'unité de résistance de freinage (8, 8.3.1, 8.3.2) a une forme géométrique telle qu'elle entoure en forme d'anneau l'arbre d'entrée et de sortie (9, 9.2, 9.3) de la machine électrique (2, 2.2, 2.3) dans le sens de la circonférence de celui-ci.

5. Système de transmission selon la revendication 4, **caractérisé en ce que** :
il est prévu une pluralité d'unités de résistance de freinage (8.3.1, 8.3.2) disposées les unes à côté des autres dans le sens axial dans le système de transmission avec un sens de circulation de la force de la chaîne d'arbres (3) à la machine électrique (2) ou vice versa ;
les unités de résistance de freinage (8.3.1, 8.3.2) ont une construction modulaire et peuvent être couplées entre elles mécaniquement et électriquement.

6. Système de transmission selon l'une des revendications 1 à 4, **caractérisé en ce que** l'unité de résistance de freinage (8, 8.2) ou la pluralité d'unités de résistance de freinage (8.3.1, 8.3.2) entourent dans le sens axial, par rapport au sens de circulation de la force de la chaîne d'arbres (3) à la machine électrique (2) ou vice-versa, le couplage entre la chaîne d'arbres (3, 3.2, 3.3) et la machine électrique (2, 2.2, 2.3).

7. Système de transmission selon la revendication 6, **caractérisé en ce que** la chaîne d'arbres (3, 3.2, 3.3) et l'arbre d'entrée et de sortie (9, 9.2, 9.3) de la machine électrique (2, 2.2., 2.3) possèdent chacun une zone d'extrémité en forme de bride (13, 13.2, 13.3, 14, 14.2, 14.3) et le couplage (12) des parties d'extrémité en forme de bride est réalisé par friction et/ou par correspondance de forme.
